# EUROPEAN PATENT APPLICATION

(11) **EP 2 264 584 A2**
(43) Date of publication of application: **22.12.2010**
(21) Application number: 10156332.8
(22) Date of filing: 12.03.2010
(51) Int. Cl.: G06F 3/06

(54) **N-way directly connected any to any controller architecture**

(30) Priority: 09.06.2009 US 480893
(71) Applicant: LSI Corporation, Milpitas, CA 95035 (US)
(72) Inventor: Dekoning, Rodney A., Wichita KS 67230 (US); Day, Kenneth, Tucson AZ 85748 (US)
(74) Representative: Williams, David John

(57) **Abstract**

Disclosed is a storage system architecture. Array controllers are configured with at least 2M ports, where M is an integers greater than two that corresponds to the number of SAS domains or JBOD units in the system. Serial attached SCSI (SAS) domains or JBOD units are configured with at least 2N ports, where N corresponds to the number of array controllers in the system. At least two of each of the 2N ports are directly connected to a corresponding at least two of each of the 2M ports of each of the N array controllers, thereby establishing direct redundant connectivity between each of the N array controllers and each of the M SAS domains or JBOD units.

## Description

### BACKGROUND OF THE INVENTION

Mass storage systems continue to provide increased storage capacities to satisfy user demands. Photo and movie storage, and photo and movie sharing are examples of applications that fuel the growth in demand for larger and larger storage systems.

A solution to these increasing demands is the use of arrays of multiple inexpensive disks. These arrays may be configured in ways that provide redundancy and error recovery without any loss of data. These arrays may also be configured to increase read and write performance by allowing data to be read or written simultaneously to multiple disk drives. These arrays may also be configured to allow "hot-swapping" which allows a failed disk to be replaced without interrupting the storage services of the array. Whether or not any redundancy is provided, these arrays are commonly referred to as redundant arrays of independent disks (or more commonly by the acronym RAID). The 1987 publication by David A. Patterson, et al., from the University of California at Berkeley titled "A Case for Redundant Arrays of Inexpensive Disks (RAID)" discusses the fundamental concepts and levels of RAID technology.

RAID storage systems typically utilize a controller that shields the user or host system from the details of managing the storage array. The controller makes the storage array appear as one or more disk drives (or volumes). This is accomplished in spite of the fact that the data (or redundant data) for a particular volume may be spread across multiple disk drives.

### SUMMARY OF THE INVENTION

An embodiment of the invention may therefore comprise a storage array system, comprising: N array controllers configured with at least 2M ports, where N and M are greater than two; M serial attached SCSI (SAS) domains configured with at least 2N ports, at least two of each of the 2N ports being directly connected to a corresponding at least two of each of the 2M ports of each of the N array controllers, thereby establishing direct redundant connectivity between each of the N array controllers and each of the M SAS domains.

An embodiment of the invention may therefore further comprise a storage array architecture for a storage array, comprising: at least three array controllers; at least three JBOD units, each of the at least three JBOD units having at least two times as many ports as there are array controllers in the storage array, each of the at least three JBOD units being directly connected to each of the at least three array controllers at least two times thereby establishing at least two direct connections between each of the at least three array controllers and each of the at least three JBOD units.

An embodiment of the invention may therefore further comprise a storage array system, comprising: a plurality of array controllers configured with plurality of ports, where the plurality of array controllers is greater than two and the plurality of ports is greater than two; and, a plurality of serial attached SCSI (SAS) domains configured with a plurality of SAS ports so that is at least twice as many SAS ports as there are array controllers, at least two of each of said plurality of SAS ports being directly connected to a corresponding at least two of each of said plurality of ports of each of said plurality of array controllers, thereby establishing direct redundant connectivity between each of said plurality of array controllers and each of said plurality of SAS domains.

In accordance with the invention there is provided a storage array system, comprising: N array controllers configured with at least 2M ports, where N and M are integers greater than two; and M serial attached SCSI (SAS) domains configured with at least 2N ports, at least two of each of said 2N ports being directly connected to a corresponding at least two of each of said 2M ports of each of said N array controllers, thereby establishing direct redundant connectivity between each of said N array controllers and each of said M SAS domains.

Each of said N array controllers may include at least two SAS port expanders to provide said at least 2M ports. Each of said M SAS domains may include at least two SAS port expanders to provide said at least 2N ports. At least one of said M SAS domains may further include an additional SAS port expander coupled to a disk drive and coupled to said at least two SAS port expanders providing said at least 2N ports. At least one of said M SAS domains may comprise an environmental service module and a JBOD unit. At least one of said N array controllers further includes at least one disk drive.

In accordance with the invention there is provided a storage array architecture for a storage array, comprising: at least three array controllers; and, at least three JBOD units, each of said at least three JBOD units having at least two times as many ports as there are array controllers in said storage array, each of said at least three JBOD units being directly connected to each of said at least three array controllers at least two times thereby establishing at least two direct connections between each of said at least three array controllers and each of said at least three JBOD units.

Each of said at least three array controllers may include SAS port expanders to provide ports for direct connection to said at least three JBOD units. Each of said at least three JBOD units may include SAS port expanders to provide ports for direct connection to said at least three JBOD units. At least one of said JBOD units may further include an additional SAS port expander coupled to a disk drive. At least one of said JBOD units may be included in an environmental service module. At least one of said array controllers may further include at least one disk drive.

In accordance with the invention there is provided a storage array system, comprising: a plurality of array controllers configured with plurality of ports, where the plurality of array controllers is greater than two and the plurality of ports is greater than two; and, a plurality of serial attached SCSI (SAS) domains configured with a plurality of SAS ports so that is at least twice as many SAS ports as there are array controllers, at least two of each of said plurality of SAS ports being directly connected to a corresponding at least two of each of said plurality of ports of each of said plurality of array controllers, thereby establishing direct redundant connectivity between each of said plurality of array controllers and each of said plurality of SAS domains.

Each of said plurality of array controllers may include at least two SAS port expanders to provide said plurality of ports. Each of said plurality of SAS domains may include at least two SAS port expanders to provide said plurality of SAS ports. At least one of said plurality of SAS domains may further include an additional SAS port expander coupled to a disk drive and coupled to said at least two SAS port expanders providing said plurality of SAS ports. At least one of said plurality of SAS domains may comprise an environmental service module and a JBOD unit. At least one of said plurality of array controllers may further include at least one disk drive.

### BRIEF DESCRIPTION OF THE DRAWINGS

Figure 1 is a block diagram of a storage array system.

Figure 2 is a block diagram of a storage system.

Figure 3 is a block diagram of a computer system.

### DETAILED DESCRIPTION OF THE EMBODIMENTS

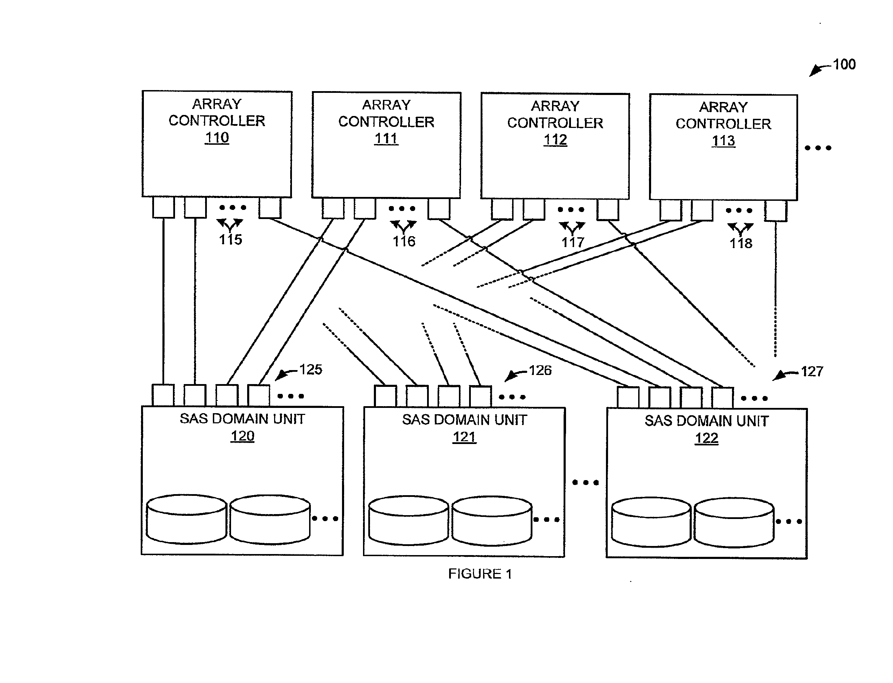

Figure 1 is a block diagram of a storage array system. In Figure 1, storage array system 100 comprises array controller 110, array controller 111, array controller 112, array controller 113, serial attached SCSI (SAS) domain unit 120, SAS domain unit 121, and SAS domain unit 122. Array controller 110 includes 2M number of ports 115. Array controller 111 includes 2M number of ports 116. Array controller 112 includes 2M number of ports 117. Array controller 113 includes 2M number of ports 118. SAS domain unit 120 includes 2N number of ports 125. SAS domain unit 121 includes 2N number of ports 126. SAS domain unit 122 includes 2N number of ports 127.

Array controllers 110-113 may be, or comprise, controllers that are compatible with or described by, for example, InfiniBand, Redundant Array of Inexpensive Disks (RAID), Network Attached Storage (NAS), Storage Array Network (SAN), iSCSI SAN, or a Virtual Tape Library (VTL), etc. SAS domain units 120-122 may be, or comprise, one or more Just a Bunch Of Disks or Just a Box Of Drives (JBOD) in an enclosure and other hardware such as SAS port expanders.

In an embodiment, array controllers 110-113 may include parity and ECC generation, battery backed data memory, NVRAM, and inter-controller write cache mirroring. For example, array controllers 110-113 may allow for nonvolatile caching of write data. This data may be mirrored between array controllers 110-113, thus providing for redundant storage of this cached data. Array controllers 110-113 may provide commit to disk capability.

Nonvolatile memory in array controllers 110-113 can provide storage that survives power failures, system shutdowns, etc. This memory may be flash, battery backed memory, or the like. Array controllers 110-113 may contain nonvolatile memory in order to perform write cache I/O processing to ensure that data will be preserved in the event of a power failure or I/O disruption.

Storage array system 100 may mirror write cached data to multiple array controllers 110-113 to ensure that data persists through the failure of an array controller 110-113. In such an event, an alternate array controller 110-113 is able to reclaim the data that was mirrored to it as part of the redundancy failover mechanism when the first controller fails.

Nonvolatile memory in array controllers 110-113 may also be used for configuration metadata that describes how storage array system 100 should be configured during initialization. This may speed the power-on sequence or indicate specific operating environments (for example, host type, default settings, etc.).

In an embodiment, storage array system 100 has N number of array controllers 110-113. Storage array system 100 has M number of SAS domain units 120-122. As can be seen in Figure 1, each array controller 110-113 is connected to each SAS domain unit 120-122 two times. These two connections established direct redundant connectivity between each of the array controllers 110-113 and each of the SAS domain units 120-122. This is illustrated, for example, by the two connections between array controller 110 and SAS domain unit 120. This is also illustrated by the two connections between array controller 111 and SAS domain unit 120. It should be understood that these connections are direct connections and do not pass through a switching fabric or other intermediate device. In another embodiment, each array controller 110-113 may be connected to each SAS domain unit 120-122 more than two times.

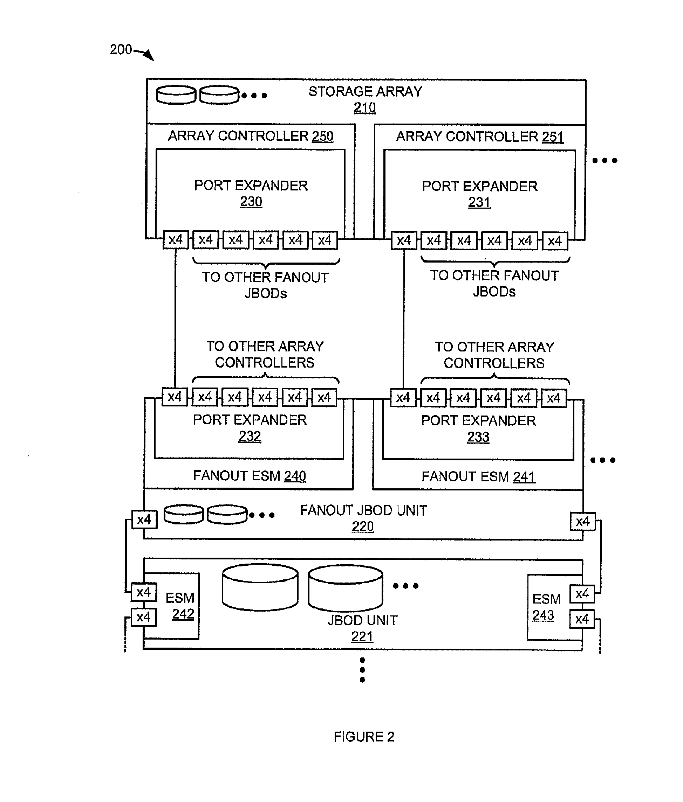

Figure 2 is an illustration of a storage system. Figure 2 illustrates the connections between one storage array 210 and one set of JBOD units 220-221. It should be understood that other storage arrays and JBOD units (not shown) are directly connected to storage array 210 and JBOD units 220-221. These have been omitted for the sake of brevity. The connections between storage array 210 and JBOD units 220 -221 may be similar or the same as those illustrated in Figure 1.

In Figure 2, storage array 210 includes array controller 250 and array controller 251. Array controller 250 includes port expander 230. Array controller 251 includes port expander 231. Storage array 210 also may include disk drives. These disk drives may be connected to port expander 230 and port expander 231. Port expander 230 and port expander 231 each include SAS ports. In Figure 2, port expander 230 and port expander 231 each have six 4-wide SAS ports. It should be understood that this is for illustration purposes only and that port expander 230 and port expander 231 would typically have at least 2M ports, where M is the number of JBOD fanout units 220 in storage system 200. An SAS port of port expander 230 is directly connected to an SAS port of port expander 232. An SAS port of port expander 231 is directly connected to and SAS port of port expander 233. Other SAS ports of port expanders 230-231 and 232-233 are connected to the port expanders of other fanout JBOD units and array controllers, respectively.

Storage array 210 may be, or comprise, a controller that is compatible with or described by, for example, InfiniBand, Redundant Array of Inexpensive Disks (RAID), Network Attached Storage (NAS), Storage Array Network (SAN), iSCSI SAN, or a Virtual Tape Library (VTL), etc. Fanout JBOD unit 220 and JBOD unit 221 may be, or comprise, one or more Just a Bunch Of Disks or Just a Box Of Drives (JBOD) in an enclosure and other hardware such as SAS port expanders.

In an embodiment, array controller 210 may include parity and ECC generation, battery backed data memory, NVRAM, and inter-controller write caching. For example, array controller 210 may allow for nonvolatile caching of write data. This data may be mirrored between array controller 210 and other array controllers (not shown), thus providing for redundant storage of this cached data. Array controller 210 may provide commit to disk capability.

Nonvolatile memory in array controller 210 can provide storage that survives power failures, system shutdowns, etc. This memory may be flash, battery backed memory, or the like. Array controller 210 may contain non-volatile memory in order to perform write cache I/O processing to ensure that data will be preserved in the event of a power failure or I/O disruption.

Storage array system 200 may mirror write cached data to multiple array controllers 210 to ensure that data persists through the failure of the storage array controller. In such an event, the alternate controller is able to reclaim the data that was mirrored to it as part of the redundancy failover mechanism when the first controller fails.

Nonvolatile memory in array controller 210 may also be used for configuration metadata that describes how storage system 200 should be configured during initialization. This may speed the power on sequence or indicate specific operating environments (for example, host type, default settings, etc.).

Fanout JBOD unit 220 includes ESM 240 and ESM 241. ESM 240 includes port expander 232. ESM 241 includes port expander 233. Fanout JBOD unit 220 and JBOD unit 221 may also include disk drives. Port expander 232 and port expander 233 each include SAS ports. In Figure 2, port expander 232 and port expander 233 may, for example, have six 4-wide SAS ports. It should be understood that this is for illustration purposes only and that port expander 232 and port expander 233 would typically have at least 2N ports, where N is the number of array controllers 210 in storage system 200. Port expander 232 and port expander 233 may also include additional SAS ports, such as 1x ports connected to disk drives. Fanout JBOD unit 220 also includes at least two more SAS ports. These SAS ports are connected to JBOD unit 221. These additional SAS ports may be provided by port expander 232 and port expander 233.

JBOD unit 221 includes ESM 242 and ESM 243. ESM 242 and ESM243 may include port expanders. JBOD unit 221 may be also connected to additional JBOD units (not shown) via ESM 242 and ESM 243. ESMs 242-243 may connect to disk drives in JBOD unit 221.

In an embodiment, an SAS port of port expander 230 is directly connected to an SAS port of port expander 232. An SAS port of port expander 231 is directly connected to an SAS port of port expander 233. Thus, fanout JBOD unit 220 is directly and redundantly connected to array controller 210. Likewise, fanout JBOD unit 220 is also directly connected by at least two direct connections to every other array controller 210 in storage system 200 (not shown). Thus, each JBOD unit 220-221 in storage system 200 is redundantly connected to each array controller 210 in storage system 200. Fanout JBOD unit 220, JBOD unit 221, and other devices such as port expander's and disk drives may be placed in a single or multiple enclosures or racks.

As can be seen in Figure 1 and Figure 2 multiple array controllers 110-113 and 210 may be directly and redundantly connected to multiple SAS JBOD domains without the use of external switching, while still providing redundant any controller to any storage device connectivity. The performance of storage array systems 100 and 200 scale as array controllers are added. Likewise, when one or more elements of the storage array systems 100 and 200 fail or are removed for service, the performance is only reduced in a linear fashion. For example, if the N=6 (i.e., there are 6 array controllers 110-113 in a system), and an array controller fails, the performance of storage array systems 100 or 200 will only be reduced to approximately 5/6 of its previous level. Compare this to a system with only two array controllers 110-113 whose performance will be reduced to approximately ½ of its previous level when one array controller fails. In addition, because there are direct connections between each array controller 110-113 or 210 separate SAS switches between controllers 110-113 and 210 and discs, or JBOD units 120-122 or 220, respectively, are avoided. These separate SAS switches increase cost and take up packaging space.

In addition, because each array controller 110-113 is interconnected with each other array controller via SAS domain unites 120-122, dedicated data transfers from array controller 110-113 to array controller 110-113 are possible. Likewise, because each storage array 210 is interconnected with each other storage array (not shown) via ESMs 240-241, dedicated data transfers from each storage array 210 to each other storage array are possible.

The systems, units, drives, devices, equipment, and functions described above may be implemented with or executed by one or more computer systems. The methods described above may also be stored on a computer readable medium. Many of the elements of storage array system 100, and storage array system 200 may be, comprise, or include computers systems. This includes, but is not limited to array controller 110, array controller 111, array controller 112, array control 113, SAS domain unit 120, SAS domain unit 121, SAS domain unit 122, array controller 210, fanout JBOD unit 220, JBOD unit 221, port expander 230, port expander 231, port expander 232, port expander 233, and any disk drives encompassed in storage array system 100 or storage array system 200.

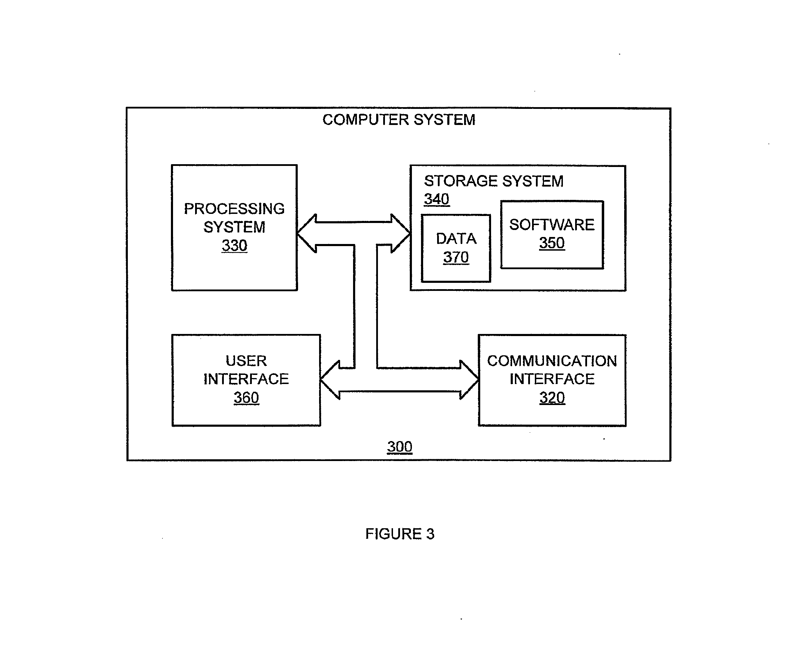

Figure 3 illustrates a block diagram of a computer system. Computer system 300 includes communication interface 320, processing system 330, storage system 340, and user interface 360. Processing system 330 is operatively coupled to storage system 340. Storage system 340 stores software 350 and data 370. Processing system 330 is operatively coupled to communication interface 320 and user interface 360. Computer system 300 may comprise a programmed general-purpose computer. Computer system 300 may include a microprocessor. Computer system 300 may comprise programmable or special purpose circuitry. Computer system 300 may be distributed among multiple devices, processors, storage, and/or interfaces that together comprise elements 320-370.

Communication interface 320 may comprise a network interface, modem, port, bus, link, transceiver, or other communication device. Communication interface 320 may be distributed among multiple communication devices. Processing system 330 may comprise a microprocessor, microcontroller, logic circuit, or other processing device. Processing system 330 may be distributed among multiple processing devices. User interface 360 may comprise a keyboard, mouse, voice recognition interface, microphone and speakers, graphical display, touch screen, or other type of user interface device. User interface 360 may be distributed among multiple interface devices. Storage system 340 may comprise a disk, tape, integrated circuit, RAM, ROM, network storage, server, or other memory function. Storage system 340 may be a computer readable medium. Storage system 340 may be distributed among multiple memory devices.

Processing system 330 retrieves and executes software 350 from storage system 340. Processing system may retrieve and store data 370. Processing system may also retrieve and store data via communication interface 320. Processing system 350 may create or modify software 350 or data 370 to achieve a tangible result. Processing system may control communication interface 320 or user interface 370 to achieve a tangible result. Processing system may retrieve and execute remotely stored software via communication interface 320.

Software 350 and remotely stored software may comprise an operating system, utilities, drivers, networking software, and other software typically executed by a computer system. Software 350 may comprise an application program, applet, firmware, or other form of machine-readable processing instructions typically executed by a computer system. When executed by processing system 330, software 350 or remotely stored software may direct computer system 300 to operate as described herein.

The foregoing description of the invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A storage array system, comprising:
N array controllers configured with at least 2M ports, where N and M are integers greater than two; and,
M serial attached SCSI (SAS) domains configured with at least 2N ports, at least two of each of said 2N ports being directly connected to a corresponding at least two of each of said 2M ports of each of said N array controllers, thereby establishing direct redundant connectivity between each of said N array controllers and each of said M SAS domains.

2. The storage system of claim 1, wherein each of said N array controllers includes at least two SAS port expanders to provide said at least 2M ports.

3. The storage system of claim 1, wherein each of said M SAS domains includes at least two SAS port expanders to provide said at least 2N ports.

4. The storage system of claim 1, wherein at least one of said M SAS domains further includes an additional SAS port expander coupled to a disk drive and coupled to said at least two SAS port expanders providing said at least 2N ports.

5. The storage system of claim 1, wherein at least one of said M SAS domains comprises an environmental service module and a JBOD unit.

6. The storage system of claim 1, wherein at least one of said N array controllers further includes at least one disk drive.

7. A storage array architecture for a storage array, comprising:
at least three array controllers; and,
at least three JBOD units, each of said at least three JBOD units having at least two times as many ports as there are array controllers in said storage array, each of said at least three JBOD units being directly connected to each of said at least three array controllers at least two times thereby establishing at least two direct connections between each of said at least three array controllers and each of said at least three JBOD units.

8. The storage system of claim 7, wherein each of said at least three array controllers includes SAS port expanders to provide ports for direct connection to said at least three JBOD units.

9. The storage system of claim 7, wherein each of said at least three JBOD units includes SAS port expanders to provide ports for direct connection to said at least three JBOD units.

10. The storage system of claim 7, wherein at least one of said JBOD units further includes an additional SAS port expander coupled to a disk drive.

11. The storage system of claim 7, wherein at least one of said JBOD units is included in an environmental service module.

12. The storage system of claim 7, wherein at least one of said array controllers further includes at least one disk drive.

13. A storage array system, comprising:
a plurality of array controllers configured with plurality of ports, where the plurality of array controllers is greater than two and the plurality of ports is greater than two; and,
a plurality of serial attached SCSI (SAS) domains configured with a plurality of SAS ports so that is at least twice as many SAS ports as there are array controllers, at least two of each of said plurality of SAS ports being directly connected to a corresponding at least two of each of said plurality of ports of each of said plurality of array controllers, thereby establishing direct redundant connectivity between each of said plurality of array controllers and each of said plurality of SAS domains.

14. The storage system of claim 13, wherein each of said plurality of array controllers includes at least two SAS port expanders to provide said plurality of ports.

15. The storage system of claim 13, wherein each of said plurality of SAS domains includes at least two SAS port expanders to provide said plurality of SAS ports.
